# EUROPEAN PATENT APPLICATION

(11) **EP 3 321 801 A1**
(43) Date of publication of application: **16.05.2018**
(21) Application number: 16779441.1
(22) Date of filing: 16.02.2016
(51) Int. Cl.: G06F 9/44

(54) **INFORMATION HIDING METHOD AND CORRESPONDING TERMINAL DEVICE**

(30) Priority: 07.07.2015 CN 201510393854
(71) Applicant: ZTE Corporation, Shenzhen, Guangdong 518057 (CN)
(72) Inventor: YANG, Peng, Shenzhen Guangdong 518057 (CN)
(74) Representative: Brunazzi, Stefano
(86) International application number: PCT/CN2016/073865
(87) International publication number: WO 2016/165466

(57) **Abstract**

An information hiding method and corresponding terminal device are provided. Terminal device sets a hiding time segment for first information to be hidden. The first information is hided in the hiding time segment of the first information. In time segments except the hiding time segment of the first information, the first information is normally displayed. By hiding data based on time segments, user privacy is protected and operations are made to be simpler and easier to use.

## Description

### Technical Field

The present invention relates to the technical field of information hiding, and in particular to an information hiding method and corresponding terminal device.

### Background

A current smart phone is very popular, and fundamentally becomes a necessity of life. Therefore, with a development of a smart phone, the smart phone bears more functions such as payment, photography and music. During a process of using these functions, part of personal sensitive information such as photos, contacts and short messages is generated and involved inevitably. The personal sensitive information is processed by using at least one encryption method so as to prevent the he personal sensitive information from leakage. When the smart phone is used each time, it is required to input at least one password to use the smart phone. However, the at least one method is inconvenient to use because it is necessary to input the at least one password each time. Meanwhile, it is time-consuming to encrypt and decrypt a smart terminal. Similar problems also exist on other terminal devices.

### Summary

In view of this, at least some embodiments of the present invention provide an information hiding method and corresponding terminal device, so as at least to partially protect privacy and make operations more convenient.

To solve the above-mentioned technical problem, the technical problem is adopted as follows.

In one embodiment, an information hiding method, applied to a terminal device, includes setting a hiding time segment for first information to be hidden; hiding the first information in the hiding time segment of the first information; and normally displaying the first information in time segments except the hiding time segment of the first information.

In an exemplary embodiment, the first information and the hiding time segment of the first information are determined as needed.

In an exemplary embodiment, the first information includes multiple pieces of information; and hiding time segments of the multiple pieces of information are set respectively, or, hiding time segments of all or part of the multiple pieces of information are set uniformly.

In an exemplary embodiment, the first information is information in at least one application on the terminal device; and after setting the hiding time segment for the first information to be hidden, the method further includes: adding a time segment-based hiding identifier and information about a hiding time segment to the first information in the at least one application.

In an exemplary embodiment, hiding the first information in the hiding time segment and normally displaying the first information in time segments except the hiding time segment includes: when an information display interface of the at least one application is opened, hiding the information to which the time segment-based hiding identifier is added and of which a hiding time segment contains a current time point in the information display interface, and hiding the information on the information display interface.

In an exemplary embodiment, the hiding time segment set for the first information is at least one time segment in a day.

In one embodiment, a terminal device includes an information processing component and a display processing component, and the information processing component is arranged to set a hiding time segment for first information to be hidden; and the display processing component is arranged to hide the first information in the hiding time segment of the first information; and to normally display the first information in time segments except the hiding time segment of the first information.

In an exemplary embodiment, the information processing component is arranged to set the hiding time segment for first information in the following manner: determining the first information as needed; and/or, the information processing component is arranged to set the hiding time segment for first information in the following manner: setting a hiding time segment for the first information.

In an exemplary embodiment, the first information includes multiple pieces of information; and the information processing component is arranged to set the hiding time segment for the first information in the following manner: setting hiding time segments for the multiple pieces of information respectively; or, setting hiding time segments of all or part of the multiple pieces of information uniformly.

In an exemplary embodiment, the first information is information in at least one application on the terminal device; and the information processing component is further arranged to add, after setting the hiding time segment for the first information, a time segment-based hiding identifier and information about a hiding time segment to the first information in the at least one application.

In an exemplary embodiment, the display processing component is configured not to display the first information in the hiding time segment and arranged to normally display the first information in time segments except the hiding time segment in the following manner: when an information display interface of the at least one application is opened, hiding the information to which the time segment-based hiding identifier is added and of which a hiding time segment contains a current time point in the information display interface, and hiding the information on the information display interface.

In an exemplary embodiment, the hiding time segment set for the first information by the information processing component is at least one time segment in a day.

A computer program, including at least one program instruction, and when the at least one program instruction is executed by a terminal, and the terminal is enabled to execute any information hiding method mentioned above.

A carrier carrying the computer program is provided.

According to at least some embodiments, data is hidden based on time segments, it is unnecessary to input at least one password during a usage process each time, and a hiding/displaying mode is intelligently switched. User privacy is protected, operations are made to be simpler and easier to use, and it is quite convenient for a user to learn and use. Besides, hardware support is not needed, and an algorithm is simple. Compared with at least one information encryption method in the related art, the information hiding method is high in computing speed and good in user experience.

### Brief Description of the Drawings

Fig. 1 is a flowchart of an information hiding method according to an embodiment of the present invention.
Fig. 2 is a component diagram of a terminal device according to an embodiment of the present invention.
Fig. 3 is a flowchart of a setting stage of an application example of the present invention.
Fig. 4 is a flowchart of a displaying/hiding stage of an application example of the present invention.

### Detailed Description

The following is a brief introduction for a subject described herein in detail. The brief introduction is not intended to restrict the scope of protection of claims.

The embodiments of the present invention will be illustrated herein below with reference to drawings in detail. It is important to note that the embodiments in the present application and characteristics in the embodiments are combined randomly under the condition of no conflicts.

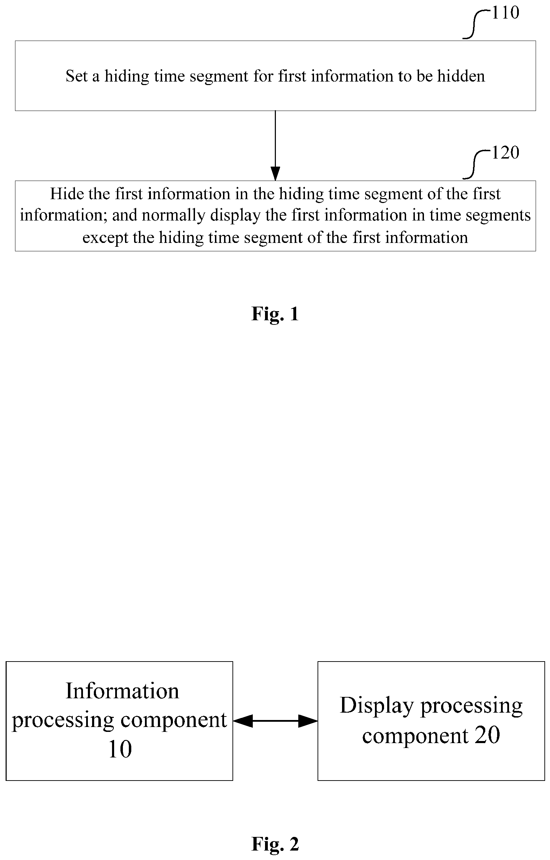

An information hiding method of the present embodiment is applied to a terminal device. According to at least one embodiment as shown in Fig. 1, the information hiding method includes the steps as follows.

At step 110, the terminal device sets a hiding time segment for first information to be hidden.

In this step, the first information to be hidden and the hiding time segment of the first information are determined according to user input. Here, the first information includes any type of information that is displayed on the terminal device such as information in at least one application on the terminal device. For example, the information in the at least one application on the terminal device includes certain one or more short messages (the more short messages include one or more classes of short messages, and a class of short messages includes short messages sent by a certain specific addresser), one or more pieces of information in instant messaging software (such as QQ and WeChat), certain one or more files, certain one or more call records and the like.

The hiding time segment set for the first information includes one or more time segments in a day, or few specific days in a week, or few specific days in a month, etc. When the first information includes multiple pieces of information, hiding time segments of the multiple pieces of information are set respectively, and hiding time segments of all or part of the multiple pieces of information are also set uniformly.

After the hiding time segment is set for the first information in the at least one application, the method further includes adding a time segment-based hiding identifier and information about a hiding time segment to the first information in the at least one application.

At step 120, the first information is hided in the hiding time segment of the first information, and the first information is normally displayed in time segments except the hiding time segment of the first information.

The time segment-based hiding identifier and the information about the hiding time segment are added to the first information in the at least one application in the previous step. In this step, when an information display interface of the at least one application is opened via user input, the information to which the time segment-based hiding identifier is added and of which the hiding time segment contains a current time point in relevant information of the information display interface is hidden, and hided on the information display interface. Other pieces of information to which the time segment-based hiding identifiers are not added are normally displayed, but hiding due to other reasons such as encryption is not excluded. Information to which the time segment-based hiding identifier is added but the hiding time segment does not contain the current time point is normally displayed.

Correspondingly, in one embodiment of the present embodiment, a terminal device is also provided. According to at least one embodiment as shown in Fig. 2, the terminal device includes:
an information processing component 10, arranged to set a hiding time segment for first information to be hidden; and
a display processing component 20, arranged not to display the first information in the hiding time segment of the first information and to normally display the first information in time segments except the hiding time segment of the first information.

Alternatively, the information processing component 10 is further arranged to determine first information as needed.

Alternatively, the information processing component 10 determines the first information according to at least one instruction input by a user.

The information processing component 10 sets a hiding time segment for the first information in the following manner: setting a hiding time segment for the first information as needed, e.g., according to user input.

Alternatively, the information processing component 10 sets a hiding time segment for the first information. The first information includes multiple pieces of information. Hiding time segments of the multiple pieces of information are set respectively, or, hiding time segments of all or part of the multiple pieces of information are set uniformly.

Alternatively, the information processing component 10 sets the hiding time segment for the first information. And the first information is information in at least one application on the terminal device.

The information processing component 10 is further arranged to add, after setting the hiding time segment for the first information, a time segment-based hiding identifier and information about a hiding time segment to the first information in the at least one application.

Alternatively, the display processing component 10 hides the first information in the hiding time segment, and normally displays the first information in time segments except the hiding time segment in the following manner:
when an information display interface of the at least one application is opened as needed, e.g., according to user input, hiding the information to which the time segment-based hiding identifier is added and of which the hiding time segment contains current time in relevant information of the information display interface, and hiding the information on the information display interface.

Alternatively, the hiding time segment set for the first information by the information processing component 10 is one or more time segments in a day.

In the present embodiment, selected sensitive information is hidden. For example, at least one certain sensitive short message is set to be invisible in an office and visible at home in a certain time segment. This solution intelligently controls display and hiding of the sensitive information without excessive participation of the user. Meanwhile, encryption and decryption processes are not needed, and a computing speed is high.

Several application examples are adopted for illustration herein below.

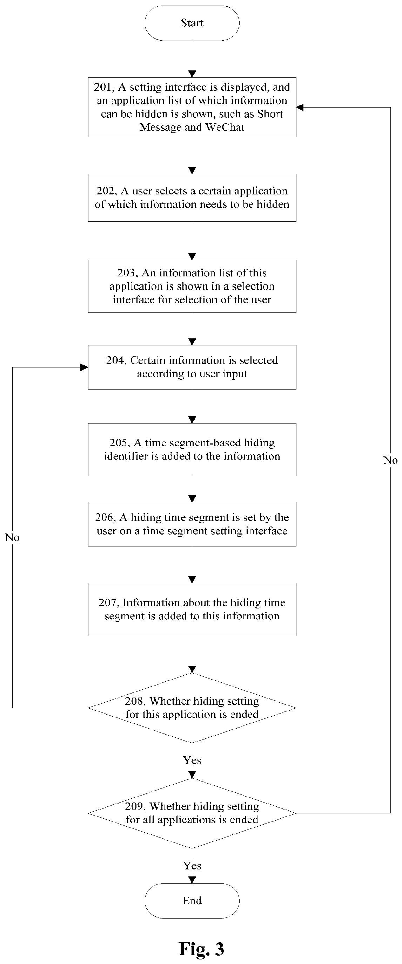

The present example automatically hides different applications in different time segments according to selection and setting. A flow of a hidden information setting stage is as shown in Fig. 3, including the steps as follows.

At step 201, a setting interface is displayed, and applications of which information is hidden in different time segments are listed, such as WeChat and Short Message.

At step 202, a certain application of which information needs to be hidden is selected.

At step 203, an information list of this application is shown in a selection interface for selection.

At step 204, certain information (namely first information) is selected as needed, e.g., according to user input.

At step 205, a time segment-based hiding identifier is added to the selected information. The time segment-based hiding identifier indicates the information to be hidden based on the time segment.

At step 206, the hiding time segment of the information is set on a time segment setting interface.

Specific setting includes a user input or a user selection.

At step 207, the hiding time segment of the information is determined as needed, e.g., according to user input, and information about the hiding time segment is added to this information.

At step 208, whether it is necessary to hide other pieces of information of this application is determined. When it is necessary to hide other pieces of information of this application, step 204 is re-executed. And when it is not necessary to hide other pieces of information of this application, step 209 is executed.

At step 209, whether it is also necessary to select information in other applications to be hidden is determined. When it is also necessary to select information in other applications to be hidden, step 201 is re-executed. And when it is not also necessary to select information in other applications to be hidden, the flow is ended.

The flow in the above-mentioned example is varied as follows.

For example, during setting of the hiding time segment, one hiding time segment is set for each piece of information as shown in the above-mentioned flow, namely respective setting. One hiding time segment is also set uniformly for a certain class of the information to be hidden in a certain application (namely adopting the same hiding time segment). One hiding time segment is also set uniformly for all pieces of information to be hidden of a certain application. Specifically, after all pieces of information to be hidden are selected completely, a time segment setting interface is entered. One hiding time segment is also set uniformly for all pieces of information to be hidden of different applications.

For another example, the above-mentioned flow refers to entering a display setting interface, selecting an application, and then selecting and setting information in the selected application. However, this specific display setting interface is not set. An option of time segment-based hiding is added to operation options of the selected information on a common application information list interface, and so on, until the above-mentioned setting is completed. The flow is not limited to any specific operation mode.

For another example, the segment-based hiding identifier is also represented by information about a hiding time segment. That is, an attribute of a hiding time segment is added to each piece of information. When the read information about the hiding time segment is null, it is shown that this information is not added with the segment-based hiding identifier. And when the read information about the hiding time segment is not null, it is shown that this information is added with the segment-based hiding identifier.

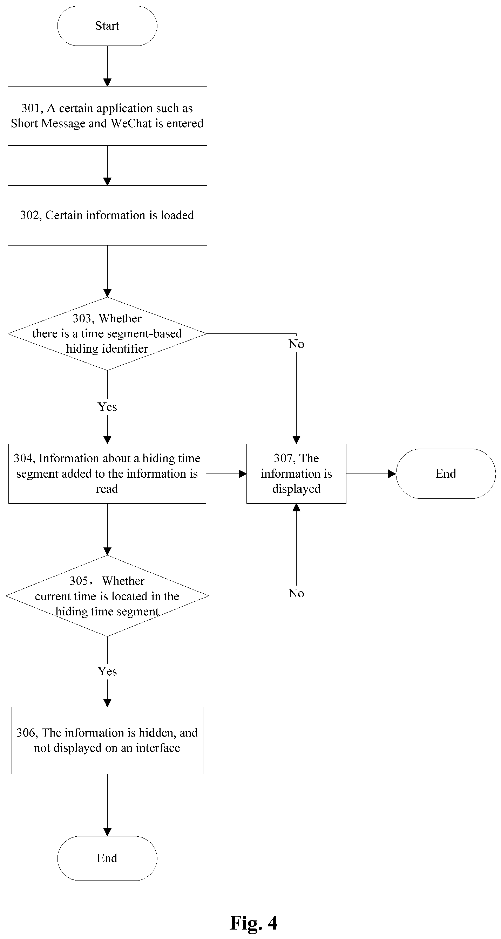

As shown in Fig. 4, displaying/hiding certain information of an application includes the steps as follows.

At step 301, a display interface of a certain application such as Short Message or WeChat is entered.

At step 302, certain information is loaded.

At step 303, whether the information is added with a time segment-based hiding identifier is determined. When the information is added with the time segment-based hiding identifier, step 304 is executed. And when the information is not added with the time segment-based hiding identifier, step 307 is executed.

At step 304, information about a hiding time segment added to the information is read.

At step 305, whether a current time point is located in the hiding time segment (i.e., whether the hiding time segment includes the current time point) is determined. When the current time point is located in the hiding time segment, step 306 is executed. And when the current time point is not located in the hiding time segment, step 307 is executed.

At step 306, the information is hidden, and not displayed on the interface. The flow is ended.

An information hiding manner refers to hiding a content of the information on the application display interface, or hiding any information on the application display interface, equivalent to absence of the information, and so on. The present invention is not limited thereto.

At step 307, the information is displayed, and the flow is ended.

Modes of processing other pieces of relevant information of the application display interface are similar, and will not be illustrated herein one by one.

In one embodiment of the present invention, a computer program is also provided, which includes at least one program instruction. When the at least one program instruction is executed by a terminal, the terminal is enabled to execute any information hiding method mentioned above.

In one embodiment of the present invention, a carrier carrying the computer program is also provided.

After the drawings and the detailed descriptions are read and understood, other aspects are understood.

Those of ordinary skill in the art understand that all or part of the steps of the above-mentioned embodiments may be implemented by using a computer program flow. The computer program is stored in a computer-readable storage medium. The computer program is executed on a corresponding hardware platform (such as system, apparatus, device and component). During execution, the computer program includes one of the steps of the method embodiment or a combination of part or all of the steps of the method embodiment.

Alternatively, all or part of the steps of the above-mentioned embodiment may also be implemented by using an integrated circuit. These steps are manufactured into integrated circuit components respectively, or a plurality of components or steps therein are manufactured into a single integrated circuit component. Thus, the present invention is not limited to a combination of any specific hardware and software.

At least one of devices, function components and function elements in the above-mentioned embodiment is implemented by using a general computation device. They are centralized on a single computation device or are distributed on a network composed of a plurality of computation devices.

When being implemented in a form of software function component and is sold or used as an independent product, at least one of devices, function components and function elements in the above-mentioned embodiment are stored in a computer-readable storage medium. The above-mentioned computer-readable storage medium is a read-only memory, a magnetic disk or an optical disk.

As will occur to any person skilled in the art, the present invention is susceptible to changes or replacements in the technical scope disclosed in the present invention. The changes or the replacements should fall within the scope of protection of the present invention. Therefore, the scope of protection of the present invention should refer to the scope of protection of the claims.

### Industrial Applicability

According to at least some embodiments, data is hidden based on time segments, it is unnecessary to input at least one password during a usage process each time, and a hiding/displaying mode is intelligently switched. User privacy is protected, operations are made to be simpler and easier to use, and it is quite convenient for a user to learn and use. Besides, hardware support is not needed, and an algorithm is simple. Compared with at least one information encryption method in the related art, the information hiding method is high in computing speed and good in user experience.

## Claims

1. An information hiding method, applied to a terminal device, comprising:
setting a hiding time segment for first information to be hidden;
hiding the first information in the hiding time segment of the first information; and
normally displaying the first information in time segments except the hiding time segment of the first information.

2. The information hiding method as claimed in claim 1, wherein
the first information and the hiding time segment of the first information are determined as needed.

3. The information hiding method as claimed in claim 1, wherein
the first information comprises multiple pieces of information; and
hiding time segments of the multiple pieces of information are set respectively, or, hiding time segments of all or part of the multiple pieces of information are set uniformly.

4. The information hiding method as claimed in claim 1 or 2 or 3, wherein
the first information is information in at least one application on the terminal device; and
after setting the hiding time segment for the first information to be hidden, the method further comprises: adding a time segment-based hiding identifier and information about a hiding time segment to the first information in the at least one application.

5. The information hiding method as claimed in claim 4, wherein
hiding the first information in the hiding time segment and normally displaying the first information in time segments except the hiding time segment comprises:
when an information display interface of the at least one application is opened, hiding the information to which the time segment-based hiding identifier is added and of which a hiding time segment contains a current time point in the information display interface, and hiding the information on the information display interface.

6. The information hiding method as claimed in claim 1 or 2 or 3 or 5, wherein
the hiding time segment set for the first information is at least one time segment in a day.

7. A terminal device, comprising an information processing component and a display processing component, wherein
the information processing component is arranged to set a hiding time segment for first information to be hidden; and
the display processing component is arranged to hide the first information in the hiding time segment of the first information; and to normally display the first information in time segments except the hiding time segment of the first information.

8. The terminal device as claimed in claim 7, wherein
the information processing component is arranged to set the hiding time segment for first information in the following manner: determining the first information as needed; and/or,
the information processing component is arranged to set the hiding time segment for first information in the following manner: setting a hiding time segment for the first information.

9. The terminal device as claimed in claim 7, wherein
the first information comprises multiple pieces of information; and
the information processing component is arranged to set the hiding time segment for the first information in the following manner: setting hiding time segments for the multiple pieces of information respectively; or, setting hiding time segments of all or part of the multiple pieces of information uniformly.

10. The terminal device as claimed in claim 7 or 8 or 9, wherein
the first information is information in at least one application on the terminal device; and
the information processing component is further arranged to add, after setting the hiding time segment for the first information, a time segment-based hiding identifier and information about a hiding time segment to the first information in the at least one application.

11. The terminal device as claimed in claim 10, wherein
the display processing component is configured not to display the first information in the hiding time segment and arranged to normally display the first information in time segments except the hiding time segment in the following manner:
when an information display interface of the at least one application is opened, hiding the information to which the time segment-based hiding identifier is added and of which a hiding time segment contains a current time point in the information display interface, and hiding the information on the information display interface.

12. The terminal device as claimed in claim 7 or 8 or 9 or 11, wherein
the hiding time segment set for the first information by the information processing component is at least one time segment in a day.

13. A computer program, comprising at least one program instruction, wherein when the at least one program instruction is executed by a terminal, and the terminal is enabled to execute the information hiding method as claimed in any one of claims 1 to 6.

14. A carrier carrying the computer program as claimed in claim 13.
